Europäisches Patentamt

European Patent Office

Office européen des brevets

(11) Numéro de publication : **0 369 133 B1**

(19)

(12) **FASCICULE DE BREVET EUROPEEN**

(45) Date de publication du fascicule du brevet :
**22.04.92 Bulletin 92/17**

(21) Numéro de dépôt : **89116902.1**

(22) Date de dépôt : **13.09.89**

(51) Int. Cl.$^5$ : **B65G 47/244,** B65G 13/10

(54) **Dispositif de transfert et d'orientation d'objets plats disposés en paquets.**

(30) Priorité : **17.10.88 FR 8814303**

(43) Date de publication de la demande :
**23.05.90 Bulletin 90/21**

(45) Mention de la délivrance du brevet :
**22.04.92 Bulletin 92/17**

(84) Etats contractants désignés :
**AT BE CH DE ES FR GB IT LI LU NL SE**

(56) Documents cités :
**DE-A- 2 101 706**
**US-A- 3 100 039**
**US-A- 3 295 660**
**US-A- 3 567 002**

(73) Titulaire : **BOBST S.A.**
**Case Postale**
**CH-1001 Lausanne (CH)**

(72) Inventeur : **Lucas, Raymond**
**Avenue de la République Préchac**
**F-33730 Villandraut (FR)**

(74) Mandataire : **Colomb, Claude**
**BOBST S.A., Service des Brevets, Case**
**Postale**
**CH-1001 Lausanne (CH)**

EP 0 369 133 B1

Jouve, 18, rue Saint-Denis, 75001 PARIS

## Description

La présente invention concerne un dispositif de transfert et d'orientation d'objets plats disposés en paquets, notamment d'objets constitués par des flans découpés en carton ondulé empilés l'un sur l'autre, comprenant un plan de transfert et d'orientation possédant un plateau à billes entraînées, ledit plateau à billes entraînées étant équipé de moyens de levage.

On connaît déjà, dans le domaine de la manutention de matériaux en plaques, empilées ou non, des dispositifs permettant d'orienter et de transporter ces objets.

L'un de ces dispositifs, décrit dans le brevet US 3,828,917, comporte une table fixe équipée de billes. Ces billes sont entraînées individuellement, par friction, à l'aide de disques montés sur des poulies entraînées en rotation par des courroies dentées. L'ensemble "disque-poulie" est solidaire d'une plaque de base qui peut être déplacée longitudinalement et transversalement à l'aide de deux vérins. Ce déplacement relatif de la plaque de base par rapport à la table fixe provoque soit une variation de la vitesse de rotation des billes, soit un changement de leur sens de rotation, ce qui permet de diriger la pile d'objets dans la direction choisie. Une commande judicieuse du déplacement de la plaque de base permet également de faire pivoter cette pile d'objets sur elle-même.

Un autre dispositif d'orientation d'objets disposés en pile est décrit dans le brevet US 3,442,410. Cette publication se rapporte à un ensemble constitué par plusieurs transporteurs à courroie sans fin entre lesquels est montée une table de retournement en forme de croix. Cette table de retournement est montée sur un arbre animé d'un mouvement rotatif de va-et-vient provoqué par deux pistons pneumatiques. Cette table de retournement est de plus montée sur un berceau relié à deux pistons pneumatiques destinés à lui transmettre un mouvement vertical permettant de soulever les objets à retourner de façon à ce qu'ils ne soient plus en contact avec les courroies sans fin des transporteurs.

Un troisième dispositif d'orientation d'objets disposés en pile ou en paquet est décrit dans le brevet US 2,897,948. Ce dispositif se rapproche de par sa conception de celui que nous venons de citer. Cependant, dans ce cas, la table de retournement est agencée de façon à présenter des ouvertures qui, lorsque cette table vient se placer en position basse, autorisent le passage de parties de rouleaux constituant le chemin de roulement pour les objets à transporter ou retourner. Dans cette exécution, le mouvement de rotation de la table est intermittent et dirigé dans un seul sens. Ce mouvement est obtenu à l'aide d'un moteur commandé par des cames disposées à la périphérie d'un disque plan destiné au levage de la table sous l'effet d'un dispositif à vérin et levier.

Les dispositifs auxquels nous avons fait référence présentent toutefois certains inconvénients.

Dans le premier dispositif susmentionné, l'obtention du mouvement de rotation des billes implique nécessairement un organe relativement compliqué par bille que l'on désire commander. De plus, la translation de la plaque de base nécessite une commande séparée qui est elle aussi coûteuse. Avec ce dispositif, il n'est pas possible de libérer les billes de la charge représentée par le poids des objets à transporter ou à retourner et, enfin, l'espacement entre les différentes billes doit être relativement important, ce qui, dans le cas du traitement de matériaux relativement délicats, implique une charge ponctuelle importante aux points de contact entre les billes et la feuille inférieure d'un empilage.

Le second dispositif n'utilise pas de billes pour le transfert des objets mais des courroies et le retournement des paquets de ces objets ne peut s'effectuer que lorsque la table en croix occupe sa position haute par rapport au plan défini par les courroies sans fin des transporteurs. Dans cette exécution, nous nous trouvons, pour ce qui est de la table en croix, en face d'un mouvement rotatif pivotant dans un sens et dans l'autre combiné avec un mouvement vertical alternatif de ladite table en croix. Ces mouvements sont engendrés l'un et l'autre par des vérins pneumatiques ou hydrauliques.

La construction de l'ensemble requiert la mise en oeuvre de moyens importants pour obtenir un simple retournement d'objets. De plus, dans ce cas, seul un retournement des objets est autorisé. Il n'est pas possible de les orienter et ensuite de les diriger vers des trajectoires différentes comme cela peut se faire au moyen du premier dispositif que nous avons décrit.

Le troisième dispositif auquel nous nous référons se rapproche beaucoup du deuxième. Il n'en diffère que par la configuration de la table de retournement qui est rectangulaire et présente des ouvertures pour laisser passer, en position basse, les parties supérieures des rouleaux de transport et par la commande en rotation de cette même table.

En effet, dans cette exécution qui, elle aussi, n'autorise la rotation des paquets d'objets que lorsque la table occupe une position haute, la commande en rotation de la table n'est pas conçue de façon à lui imprimer un mouvement rotatif de va-et-vient mais de manière à ce que celle-ci soit actionnée séquentiellement toujours dans le même sens de rotation, à l'aide d'un moteur dont la commande électrique est pilotée par une canne montée sur l'axe de la table.

La commande du mouvement vertical est assurée à l'aide d'un dispositif faisant intervenir un vérin et un levier.

Les inconvénients d'un tel dispositif sont les mêmes que ceux que nous avons cités en référence avec le dispositif précédent.

La présente invention a pour but de remédier aux inconvénients précités.

A cet effet, l'invention consiste en un dispositif de transfert et d'orientation d'objets plats disposés en paquets, notamment d'objets constitués par des flans découpés en carton ou carton ondulé empilés l'un sur l'autre, comprenant un plan de transfert et d'orientation possédant un plateau à billes, des moyens d'entraînement en rotation séquentielle dudit plateau à billes, des moyens d'entraînement desdites billes et des moyens pour déplacer verticalement ledit plateau à billes, dans lequel ledit plan de transfert et d'orientation est constitué par une table à billes entraînées, entourant un plateau tournant à billes entraînées, supporté par un palier central, ledit plateau tournant à billes entraînées, de forme circulaire, étant supporté par un organe de soutien, de façon à ce que son plan soit en alignement avec le plan défini par ladite table à billes entraînées, lesdits moyens d'entraînement en rotation du plateau tournant à billes entraînées sont constitués par un actuateur rotatif piloté en fonction de l'orientation que l'on désire donner aux objets travaillés, lesdits moyens d'entraînement des billes entraînées sont constitués par au moins un organe à déplacement linéaire disposé au-dessous du plan de transfert et d'orientation, la face supérieure dudit organe à déplacement linéaire étant en contact permanent avec la partie inférieure des billes entraînées de la table à billes entraînées et avec la partie inférieure des billes entraînées dudit plateau tournant à billes entraînées quand ce dernier est substantiellement dans le plan de la table, les moyens pour déplacer verticalement ledit plateau tournant à billes entraînées sont constitués par au moins un vérin piloté en fonction de l'importance du format des objets travaillés, monté entre un châssis inférieur du dispositif et une semelle supportant, à l'aide de bras, le plateau tournant à billes entraînées et lesdites billes entraînées de la table à billes entraînées et du plateau tournant à billes entraînées sont insérées dans des moyens de guidage.

Les avantages obtenus grâce à cette invention consistent essentiellement en ce que la commande judicieuse des moyens d'entraînement des billes entraînées du plateau et de la table et des moyens d'entraînement du plateau autorise, d'une part, une orientation quelconque des objets travaillés lorsque ceux-ci ont un format maximum inscrit dans la circonférence du plateau, ainsi que le travail d'objets d'un format plus grand que le diamètre du plateau en soulevant celui-ci pour éviter les frottements intempestifs des bords extrêmes desdits objets sur la table lors de la rotation de ceux-ci. Au total, le dispositif se distingue par une augmentation de la vitesse de transfert et d'orientation des objets permettant ainsi d'augmenter la cadence de production d'une installation utilisant le dispositif. Les organes mécaniques à mettre en oeuvre pour construire le dispositif étant de nature simple, il est évident que le coût du dispositif sera réduit dans de grandes proportions par rapport aux dispositifs existants.

Un exemple de réalisation d'un dispositif selon l'invention sera décrit en détail et à titre d'exemple à l'aide du dessin annexé dans lequel

La figure 1 est une vue en perspective d'un dispositif de transfert et d'orientation,
La figure 2 est une vue en plan, schématique, d'une première forme de réalisation du dispositif de la figure 1,
La figure 2a est une vue en plan, schématique, d'une seconde forme de réalisation du dispositif de la figure 1,
La figure 3 est une vue en coupe selon III ÷ III de la figure 2,
La figure 4 est une vue en coupe selon IV ÷ IV de la figure 2,
La figure 5 est une vue en coupe selon V ÷ V de la figure 2 et
La figure 6 est une vue en coupe selon VI ÷ VI de la figure 2.

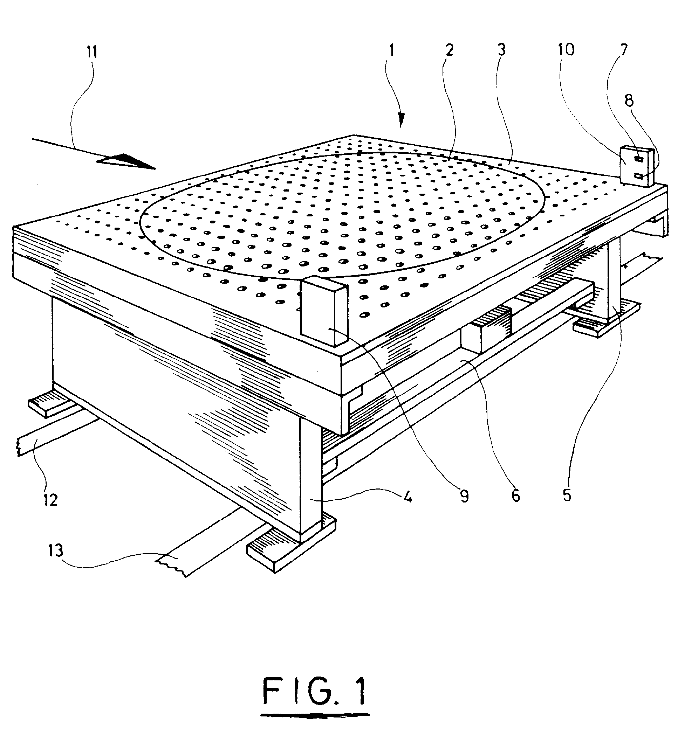

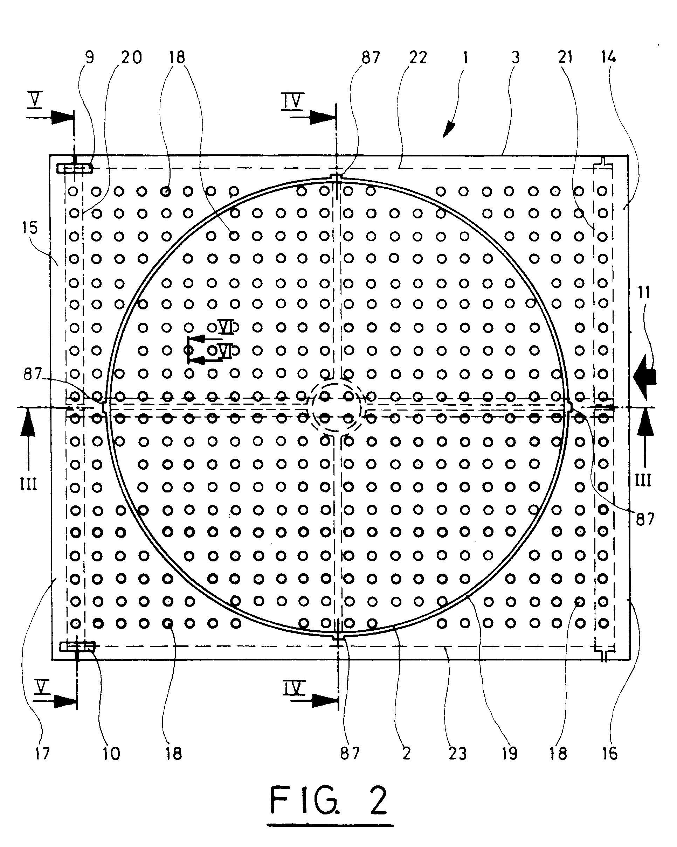

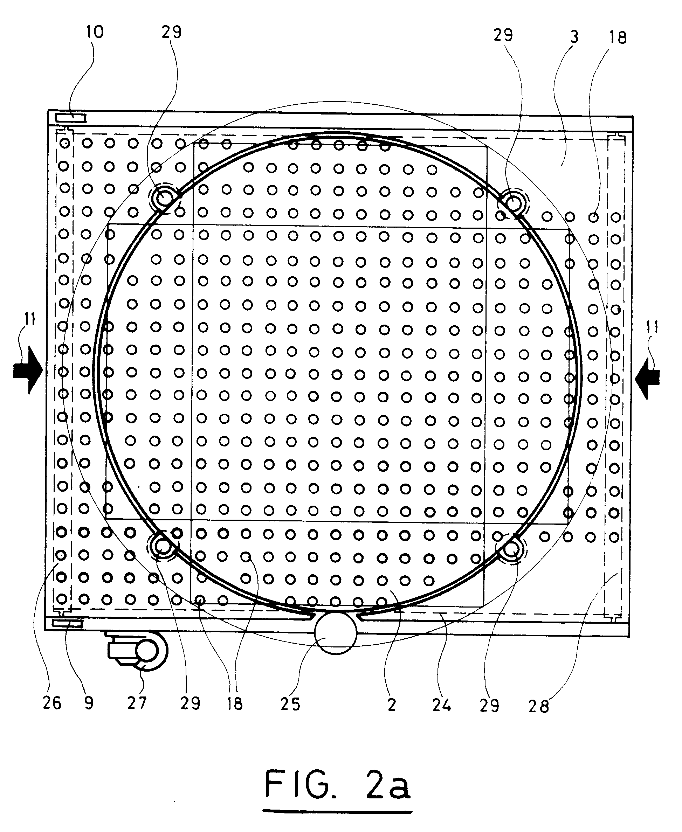

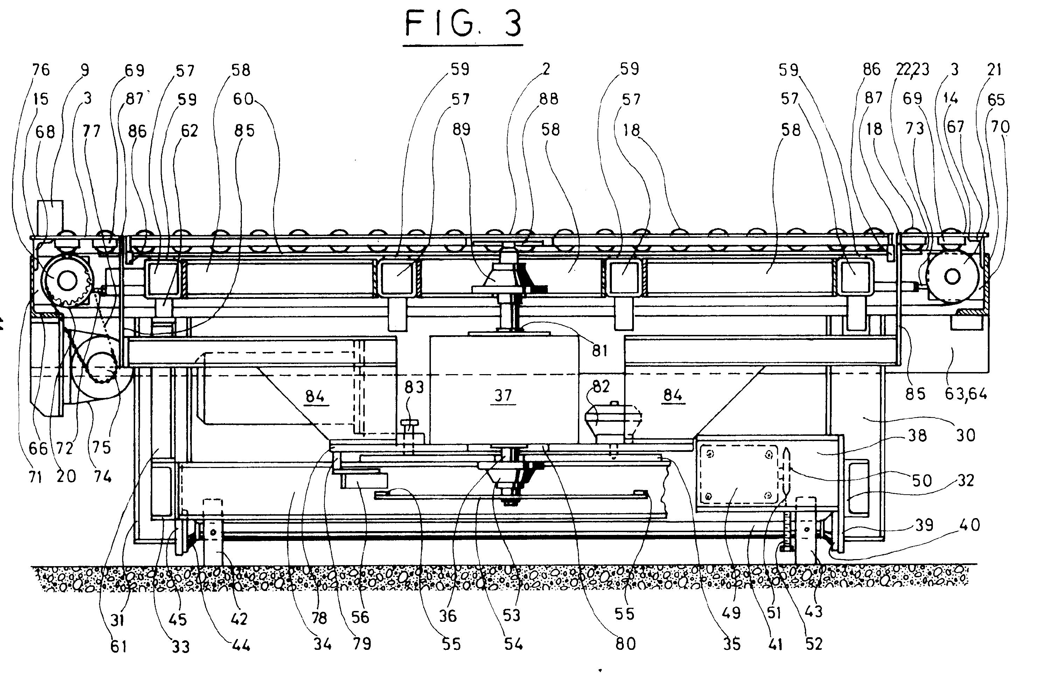

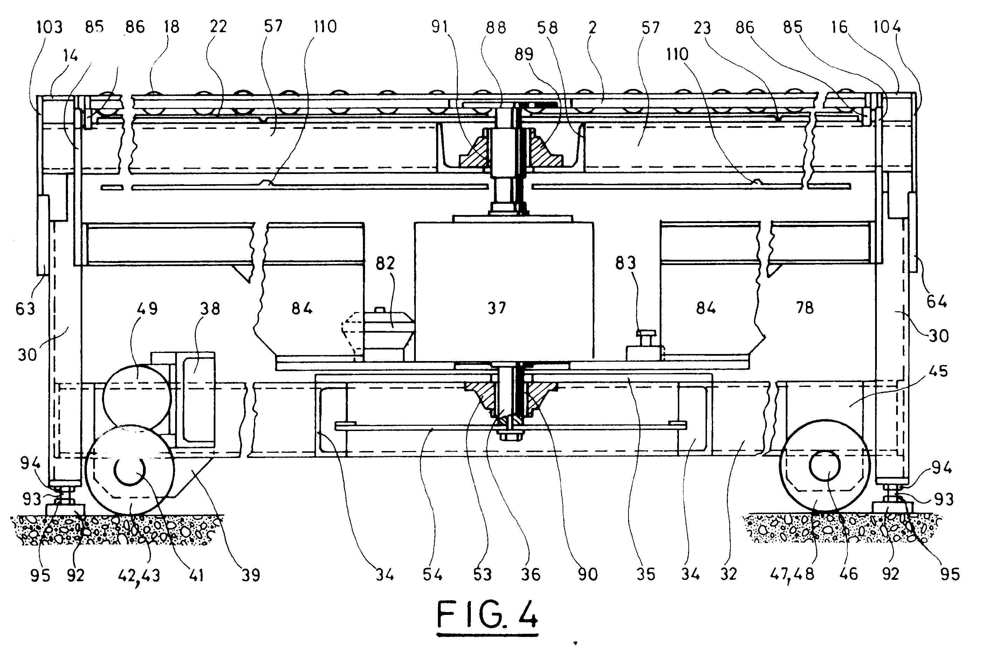

La figure 1 est une vue en perspective d'un dispositif de transfert et d'orientation (1) correspondant à la forme de réalisation décrite par la figure 2. La figure 1 représente en particulier la disposition du plateau tournant (2) aménagé au centre d'une table à billes (3). Cette table à billes (3) ainsi que le plateau tournant (2) sont supportés par deux bâtis latéraux (4 et 5) reliés entre eux par des entretoises (6) dont seule l'une d'elles est visible sur cette figure. La disposition des entretoises et des organes de commande du plateau tournant (2) sera expliquée en détail à l'aide des figures 3 et 4. Ainsi que nous le verrons plus avant dans la description, le plateau tournant (2) n'est pas seulement entraîné en rotation mais il peut être soulevé par rapport au plan défini par la table à billes (3). La commande en rotation ainsi que le soulèvement du plateau tournant (2) est déclanchée au moyen des cellules photo-électriques (7 et 8) montées dans des supports (9 et 10) placés à l'une des extrémités de la table à billes (3), de préférence à l'endroit où arrivent les piles d'objets (non représentés) à travailler. Ces piles d'objets se déplacent dans le sens indiqué par la flèche (11). Il est à remarquer que dans la présente exécution, le dispositif de transfert et d'orientation est agencé de façon à pouvoir se déplacer sur des rails (12 et 13) préalablement fixés dans la dalle du local abritant la chaîne de production des flans découpés (non représentée).

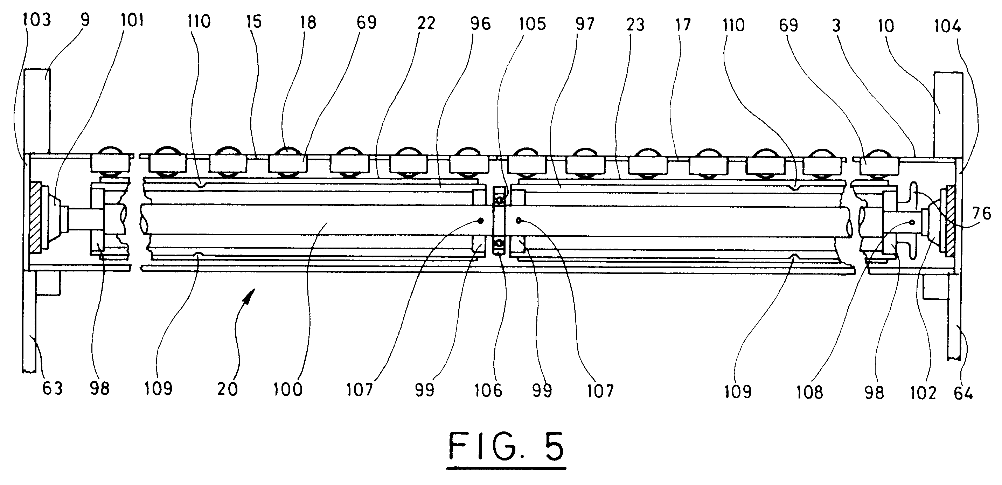

La figure 2 est une vue en plan, schématique, d'une première forme de réalisation du dispositif de transfert et d'orientation (1) de la figure 1. Dans cette figure, l'arrivée des paquets de flans découpés s'effectue dans la direction représentée par la flèche (11). La table à billes (3) de forme sensiblement rectangulaire est constituée de quatre quadrants (14, 15, 16 et 17) reliés entre eux. Ces quatre quadrants (14 à 17) sont munis de logements dans lesquels sont insérées des billes (18). L'ensemble de ces quatre quadrants (14 à 17) forme la partie fixe de la table à billes (3). Ces quadrants (14 à 17) entourent un plateau tournant (2), lui aussi équipé de billes (18) semblables à celles de la table à billes (3), pouvant être, pour des raisons de fabrication, composé de deux demi-parties circulaires. Un jeu (19) est laissé entre les quadrants (14 à 17) et la circonférence du plateau tournant (2). Dans l'exécution représentée ici, la commande du plateau tournant (2) est effectuée par l'axe central dudit plateau [voir figure 4]. Les billes (18) sont entraînées par l'intermédiaire de deux tapis sans fin (22 et 23) [voir figure 5] dont le mouvement est donné par le rouleau double avant (20) Ces deux tapis sans fin (22 et 23) passent en outre sur un rouleau double arrière (21) servant également, dans ce cas, de dispositif de tension desdits tapis sans fin (22 et 23).

La figure 2a est une vue en plan, schématique, d'une seconde forme de réalisation du dispositif de la figure 1. Dans cette figure, on retrouve les mêmes éléments que dans la figure 2. Par conséquent, ils seront référencés avec les mêmes numéros à l'exception, bien entendu, des organes supplémentaires ou différents.

Les piles d'objets à travailler se déplacent dans le sens indiqué par la flèche (11) et arrivent sur la table à billes (3) puis sont acheminées sur le plateau tournant (2). Le mouvement des billes (18) de la table à billes (3) et du plateau tournant (2) est obtenu à l'aide d'un seul tapis sans fin (24). L'utilisation d'un seul tapis sans fin (24) est rendue possible dans cette exécution, par le fait que la commande en rotation du plateau tournant (2) est constituée par un galet d'entraînement (25), monté sur l'axe d'un moteur-réducteur (non représenté) agissant sur la circonférence du plateau tournant (2). Dans cette exécution, le tapis sans fin (24) est entraîné par un rouleau avant (26) commandé par un moteur-réducteur (27). Le tapis sans fin (24) passe, en outre, autour d'un rouleau arrière (28) servant aussi, dans ce cas, d'élément de mise en tension du tapis sans fin (24). Le plateau tournant (2) est, d'autre part, maintenu en position centrée à l'aide de quatre galets de centrage (29) montés à la périphérie du plateau et maintenus dans des paliers aménagés dans la table à billes (3). Il est clair que l'on pourrait imaginer de remplacer les tapis sans fin par tout autre organe à déplacement linéaire susceptible de transmettre son mouvement aux billes (18), par exemple un organe constitué par une chaîne de transport à plateaux rigides, ce qui permettrait de travailler des piles d'objets plus lourdes telles que des tôles d'acier par exemple, ou des palettes complètes chargées de paquets de boîtes découpées.

La figure 3 est une vue en coupe selon III ÷ III de la figure 2 représentant plus en détail la structure du dispositif. Celui-ci comprend un châssis inférieur constitué par des colonnes verticales (30 et 31) reliées par des traverses (32 et 33). Les traverses (32 et 33) sont, quant à elles, reliées avec des entretoises (34) de façon à constituer un cadre inférieur rigide sur lequel est fixée une plaque d'appui (35), percée en son centre pour laisser passer l'arbre (36) du moteur-réducteur (37) ainsi que représenté sur la droite de la figure, un support (38) est fixé contre la face de chacune des traverses (32 et 33). Ce support (38) comporte une plaque de base (39) sur laquelle est monté un palier (40) dans lequel s'engage l'extrémité de l'axe (41) destiné à supporter les galets (42 et 43) servant au déplacement du dispositif. L'autre extrémité de l'axe (41) est, quant à elle, supportée par un palier (44) vissé contre la plaque support (45) fixée contre la face de la traverse (33). Il est évident qu'une construction similaire est prévue pour maintenir l'autre axe (46) qui supporte les galets (47 et 48) [voir figure 4]. Le déplacement du dispositif s'effectue à l'aide d'un moteur (49) vissé sur le support (38). L'arbre de sortie de ce moteur (49) est pourvu d'une roue à chaîne (50) reliée par une chaîne (51) à une autre roue à chaîne (52) montée sur l'arbre (41). L'arbre (36) du moteur-réducteur (37) s'engage dans un palier lisse inférieur (53) vissé contre la face inférieure de la plaque d'appui (35). L'extrémité de l'arbre (36) dépassant du palier (53) est équipée d'un disque de codage (54) muni de plots (55) destinés à être détectés par un capteur de proximité (56), de façon à pouvoir contrôler la rotation du moteur-réducteur (37). Ce dispositif pourrait avantageusement être remplacé par un décodeur placé en bout d'arbre, par exemple un générateur d'impulsion disponible directement du commerce.

La partie du dispositif que nous décrivons actuellement, peut être assimilée à ce que nous appellerons la partie fixe qui comprend en outre un châssis supérieur constitué par un ensemble de traverses tubulaires (57) reliées par des entretoises (58). Chacune des traverses tubulaires (57) est équipée, à sa partie supérieure, de cales (59) sur lesquelles est vissée une tôle d'appui (60) constituant le plan de support des tapis sans fin (22 et 23). Le châssis supérieur est, d'autre part, relié au châssis inférieur à l'aide de poutrelles verticales (61) dont une seule a été représentée sur la gauche de la figure 3. Ces poutrelles verticales (61) sont surmontées d'une barre d'appui (62) sur laquelle vient reposer et se fixer la face inférieure des traverses tubulaires (57). Deux longerons (63 et 64) sont vissés sur la face extérieure des colonnes verticales (30 et 31) de façon à servir de point d'ancrage pour la table à billes (3) par l'intermédiaire des équerres (65 et 66) et des cornières (67 et 68). La table à billes (3) est, comme indiqué précédemment, formée de quatre quadrants (14 à 17) dans lesquels sont enchâssés les douilles à billes (69). Les équerres (65 et 66) supportent aussi les paliers (70 et 71) des rouleaux doubles avant (20) et arrière (21).

Dans l'exécution représentée ici, les paliers (70 et 71) peuvent être ajustés longitudinalement à l'aide des organes de déplacement (72 et 73) de façon à régler le parallélisme des rouleaux doubles (20) respectivement (21) ainsi qu'à appliquer une certaine tension aux deux tapis sans fin (22 et 23). L'entraînement des tapis sans fin (22 et 23) est réalisé à l'aide d'un moteur-réducteur (74) dont le mouvement est communiqué au rouleau double (20) à l'aide des pignons à chaîne (75 et 76) reliés par une chaîne (77).

Nous allons maintenant décrire ce qu'il convient d'appeler la partie mobile du dispositif. Cette partie mobile comprend une semelle (78) sur laquelle est fixée le moteur-réducteur (37) de commande du plateau tournant (2). Le capteur de proximité (56) est lui aussi fixé à la semelle (78) par un étrier (79). Dans l'exécution représentée ici, le moteur-réducteur (37) possède un moyeu central tubulaire dans lequel l'arbre (36) du plateau tournant (2) est claveté et assuré en position verticale par des bagues d'arrêt (80 et 81). Au moins un vérin pneumatique (82) est monté sur la face supérieure de la semelle (78) et l'axe de poussée du vérin pneumatique (82) traversant la semelle (78) vient s'appuyer dans un alésage aménagé dans la plaque d'appui (35). La limitation de la course verticale de la partie mobile est obtenue à l'aide d'une butée (83) fixée dans la plaque d'appui (35). On a prévu d'utiliser une butée (83) par vérin pneumatique (82). La butée (83) est agencée de façon à agir conjointement avec un interrupteur de fin de course (non représenté) destiné à piloter la commande en rotation du plateau tournant (2) lorsque l'on utilise la fonction de rotation avec plateau en haut, fonction que l'on a l'obligation de programmer au pupitre de commande du dispositif. La semelle (78) est, en outre, munie de quatre bras (84) supportant à leurs extrémités un coulisseau de guidage (85) équipé d'un galet-support (86) en contact avec la périphérie de la face inférieure du plateau tournant (2) et lui servant ainsi de point d'appui et de roulement. Les coulisseaux de guidage (85) s'engagent dans une coulisse (87) usinée dans les quadrants (14 à 17) de la table à billes (3). Le plateau tournant (2) est, lui ausi, équipé de douilles à billes (69) semblables à celles de la table à billes (3). Le centre du plateau tournant (2) possède un manchon (88) fixé sur l'extrémité supérieure de l'arbre (36) qui est guidé à cet endroit dans un palier lisse supérieur (89) fixé contre la face inférieure de l'entretoise (58) placée au centre du châssis supérieur. Dans la figure 3, le plateau tournant (2) est représenté en position abaissée, c'est-à-dire dans une position telle que la partie inférieure des billes (18) soit en contact avec la face supérieure des deux tapis sans fin (22 et 23). Il est évident que le système de levage que nous venons de décrire constitue l'une des exécutions de cette fonction mais l'on pourrait facilement imaginer d'avoir, par exemple, un moteur-réducteur possédant une douille centrale cannelée dans laquelle se déplacerait l'arbre du plateau tournant, par exemple sous l'effet d'un vérin placé à l'extrémité inférieure de l'arbre du plateau tournant et agissant sur celui-ci au travers d'une butée à billes. D'autres possibilités d'entraînement angulaire et de soulèvement du plateau tournant sont envisageables, par exemple engrenages, courroies crantées pour la rotation, et cames pour le soulèvement. Le fonctionnement du dispositif sera expliqué plus avant dans la présente description.

La figure 4 est une vue en coupe selon IV ÷ IV de la figure 2, destinée à représenter la disposition dans le sens transversal des divers éléments déjà décrits en référence à la figure 3. On peut observer, dans la figure 4, les détails des paliers lisses (53 et 89) qui autorisent, à l'aide des douilles (90 et 91), le déplacement vertical de l'arbre (36) supportant le plateau tournant (2). On remarquera que les tapis sans fin (22 et 23) sont munis d'une nervure de centrage (110) facilitant leur guidage longitudinal. Dans le but d'assurer la position du dispositif après l'avoir amené à son emplacement de fonctionnement, on a équipé chacune des colonnes verticales (30 et 31) d'un organe d'appui composé d'une assiette (92), d'une tige filetée (93), d'un écrou (94) et d'un contre-écrou (95).

La figure 5 est une vue en coupe selon V ÷ V de la figure 2 montrant en détail la construction du rouleau double avant (20). Le rouleau double avant (20) est constitué par deux chemises cylindriques (96 et 97) fermées par des embouts (98 et 99) qui sont alésés de façon à laisser passer un arbre d'entraînement (100) supporté à ses deux extrémités dans des paliers (101 et 102) fixés contre des joues (103) respectivement (104) solidaires des longerons (63 et 64) [voir aussi figure 4]. L'arbre d'entraînement (100) est, d'autre part, supporté en son centre dans un palier à billes (105) aménagé dans un support (106). La position latérale des ensembles chemises cylindriques (96 et 97) et embouts (98 et 99) est assurée à l'aide de goupilles (107) traversant les embouts (98 et 99) et l'arbre d'entraînement (100), ce qui permet également l'entraînement en rotation du double rouleau avant (20). Comme expliqué précédemment, cet entraînement est obtenu à l'aide d'un moteur-réducteur (74) équipé d'une roue à chaîne (75) reliée à la roue à chaîne (76) par une chaîne (77) [voir figure 3]. La roue à chaîne (76) est fixée à l'extrémité de l'arbre d'entraînement (100) faisant face au palier (102) à l'aide d'une goupille (108). Les chemises cylindriques (96 et 97) présentent, en outre, une rainure (109) dans laquelle s'engage la nervure de centrage (110) de chacun des tapis sans fin (22 et 23). Dans cette figure, on voit également les deux quadrants (15 et 17) de la table à billes (3) ainsi que les cellules photo-électriques (9 et 10) dont le fonctionnement sera décrit ci-après. Les douilles à billes (69) portant les billes (18) sont chassées dans leur quadrant respectif et les billes (18) seront, à cet endroit de la table à billes (3), toujours en contact avec la face supérieure des tapis sans fin (22 et 23).

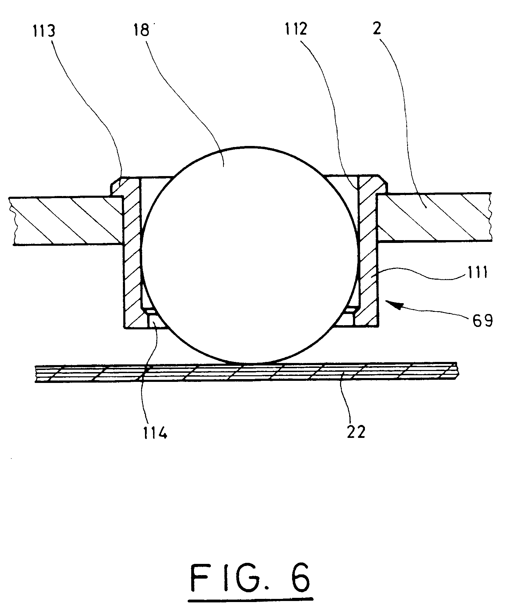

La figure 6 est une vue en coupe selon VI ÷ VI de la figure 2 représentant la façon dont est construite l'une des douilles à billes (69).

Nous admettons pour la description de cette figure qu'il s'agit de l'une des douilles à billes (69) montée dans le plateau tournant (2) et que le tapis sans fin (22) est celui sur lequel la bille (18) va s'appuyer. La douille à billes (69) se présente sous la forme d'un corps cylindrique tubulaire (111) possédant un alésage (112) calibré de façon à ce que la bille (18) puisse s'ébattre librement, c'est-à-dire qu'elle puisse indifféremment tourner sur elle même et se déplacer verticalement dans l'alésage (112). Le corps cylindrique tubulaire (111) comporte sa partie supérieure une collerette (113) servant à fixer sa position verticale lorsqu'il est chassé dans le plateau tournant (2). A la partie inférieure de l'alésage (112), on a prévu un étranglement (114) chanfreiné destiné à servir de siège pour la bille (18) lorsque le plateau tournant (2) sera placé en position haute. Ainsi, lorsque cette position est atteinte, la bille (18) viendra reposer sur ce siège et sa partie supérieure sera alors à un niveau situé juste en dessous de la partie supérieure de la collerette (113) et la course de montée du plateau tournant (2) étant plus grande que la course verticale que peut faire la bille (18) dans son alésage (112), il n'y aura plus de contact entre la partie inférieure de la bille (18) et la face supérieure du tapis sans fin (22). A cet instant, les objets placés sur le plateau tournant (2) ne seront donc plus en contact avec les billes (18) mais reposeront sur un plan défini par la partie supérieure des collerettes (113).

Rappelons que le dispositif de transfert et d'orientation (1) est destiné à traiter des paquets de feuilles empilées l'une sur l'autre provenant d'une machine de transformation, par exemple une presse de découpage de feuilles de carton ondulé. Les feuilles travaillées par la presse de découpage comportent généralement plusieurs poses représentant chacune une découpe de boîte pliante. Ces diverses poses sont reliées entre elles par des points d'attache et sont empilées à la station de réception de la presse de découpage. Cette pile de feuilles n'est donc pas immédiatement utilisable, par exemple par une machine de pliage des découpes de boîtes. Il convient d'effectuer la séparation de chaque paquet de poses à l'aide d'un appareil appelé séparateur.

En règle générale, et en fonction de la disposition des diverses poses sur la feuille, il est nécessaire de faire subir un changement de direction à la pile de feuilles sortant, sur un premier transporteur, de la station de réception de la presse de découpage avant de l'introduire dans le séparateur. Pour effectuer ce changement de direction, on utilise le dispositif de transfert et d'orientation (1) qui fonctionne comme suit :

La pile de feuilles, sortant de la presse de découpage, est amenée sur le dispositif à l'aide d'un transporteur équipé de cellules photo-électriques de détection de l'avant et de l'arrière de la pile. Dans un premier temps, les cellules photo-électriques détectent l'avant de la pile de feuilles, ce qui a pour effet de mettre en fonctionnement les deux tapis sans fin du dispositif de transfert et d'orientation (1) et, par là, la rotation des billes (18). La détection de l'avant de la pile par les cellules photo-électriques aura aussi eu pour effet d'ouvrir le circuit de comptage des impulsions d'un générateur d'impulsions placé sur le rouleau de sortie du transporteur. La distance sur laquelle la pile de feuilles doit être déplacée pour arriver au centre géométrique du plateau tournant (2) correspond à un certain nombre d'impulsions du générateur d'impulsions. Le nombre d'impulsions va dépendre de la dimension, dans le sens de déplacement, de la pile. Les cellules photo-électriques doivent aussi détecter l'arrière de la pile de feuilles, de façon à ce que le calcul correct du nombre d'impulsions puisse être effectué. Le nombre d'impulsions données étant atteint, on aura l'assurance que la pile de feuilles se trouvera centrée sur le plateau tournant (2) et l'entraînement du transporteur et des tapis sans fin (22 et 23) du dispositif sera interrompu et, par conséquent, la rotation des billes (18) cessera. Dans le cas d'une pile de feuilles dont le format s'inscrit dans la circonférence du plateau tournant (2), celui-ci sera immédiatement entraîné en rotation et cela d'un angle de 45°, ce qui aura pour effet de faire pivoter le paquet de 90° sous l'effet de la rotation relative des billes (18) et du plateau tournant (2). Dans le cas où le format de la pile de feuilles est plus grand que la circonférence du plateau tournant (2), celui ci sera soulevé, dès l'arrêt des tapis sans fin (22 et 23), puis immédiatement entraîné en rotation d'un angle de 90°, car dans cette situation, on ne bénéficiera pas de l'effet des billes (18), celles-ci n'étant plus en contact ni avec les tapis sans fin (22 et 23), ni avec la face inférieure de la pile de feuilles.

Les deux modes de fonctionnement susmentionnés peuvent être choisis en commutant un interrupteur placé sur le pupitre de commande du dispositif.

Dans le premier cas, l'angle de rotation du plateau tournant (2) est contrôlé par un dispositif de codage monté en bout de l'arbre (36) du plateau tournant (2). La rotation ayant été accomplie, les tapis sans fin (22 et 23) seront à nouveau mis en mouvement et les billes (18) à nouveau entraînées, ce qui aura pour effet de faire avancer la pile de feuilles, retournée dans son plan de 90°, en direction du séparateur. Afin d'avoir l'assurance que l'opération de séparation puisse s'effectuer dans le séparateur, c'est-à-dire qu'il n'y ait pas de pile de feuilles en travail dans celui-ci, deux cellules photo-électriques (9 et 10) sont montées à l'extrémité de sortie du dispositif de transfert et d'orientation 1. Si ces cellules détectent l'arrière d'une pile en cours de séparation, elles envoient une information à l'organe de commande des tapis sans fin (22 et 23) de façon à ce qu'ils ne soient pas mis en mouvement et cela, jusqu'à ce que l'arrière de la pile ne coupe plus le rayon lumineux émis par ces cellules photo-électriques. Dès que ces cellules photo-électriques ne sont plus masquées, l'ordre est donné au transporteur placé à la réception de la presse de découpage de se remettre en mouvement et un nouveau cycle pourra recommencer.

Dans le deuxième cas mentionné ci-dessus, dès que la rotation de 90 ° du plateau tournant est accomplie, c'est-à-dire lorsque le dispositif de codage aura contrôlé cette rotation, le plateau tournant (2) sera redescendu dans sa position basse et l'interrupteur de fin de course associé à la butée (83) sera actionné. Cela aura pour effet de mettre en mouvement les tapis sans fin (22 et 23) qui actionneront les billes (18) de façon à faire avancer la pile de feuilles en direction des cellules photo-électriques (9 et 10) qui fonctionneront alors de la même façon que dans le premier cas.

Nous venons de décrire le fonctionnement du dispositif de transfert et d'orientation (1) lorsqu'il est inséré à une configuration particulière d'une chaîne de production. Cependant, l'utilisation de ce dispositif peut se faire de multiples façons. En effet, en raison de l'entraînement particulier des billes (18) de la table à billes (3) et du plateau tournant (2), il est possible d'imaginer, pour des piles inscrites dans la circonférence du plateau tournant (2), que l'on puisse synchroniser à la fois la rotation de celui-ci et le déplacement des tapis sans fin (22 et 23), de façon à ce que des piles de feuilles, par exemple déjà séparées en paquets, soient délivrées à une machine, par exemple un palettiseur suivant des emplacements différents dans la largeur du dispositif, permettant ainsi de réaliser des couches de paquets placés l'un à côté de l'autre. Outre cet avantage de présenter une gamme d'utilisation très large, le dispositif permet, du fait de l'action conjugée de la rotation du plateau tournant (2) et des billes (18), de réduire dans une très large mesure le temps nécessaire au retournement dans le plan d'une pile de feuilles puisque, comme explique précédemment, une rotation de 90° de la pile ne nécessite qu'une rotation de 45° du plateau tournant (2).

De nombreuses améliorations peuvent être apportées au dispositif dans le cadre de l'invention que nous venons de décrire.

## Revendications

1. Dispositif de transfert et d'orientation d'objets plats disposés en paquets, notamment d'objets constitués par des flans découpés en carton ou carton ondulé empilés l'un sur l'autre, comprenant un plan de transfert et d'orientation possédant un plateau à billes, des moyens d'entraînement en rotation séquentielle dudit plateau à billes, des moyens d'entraînement desdites billes et des moyens pour déplacer verticalement ledit plateau à billes, dans lequel ledit plan de transfert et d'orientation est constitué par une table à billes (3) entraînées, entourant un plateau tournant (2) à billes (18) entraînées, supporté par un palier central, ledit plateau tournant (2) à billes (18) entraînées, de forme circulaire, étant supporté par un organe de soutien, de façon à ce que son plan soit en alignement avec le plan défini par ladite table à billes (3) entraînées, lesdits moyens d'entraînement en rotation du plateau tournant (2) à billes (18) entraînées sont constitués par un actuateur rotatif piloté en fonction de l'orientation que l'on désire donner aux objets travaillés, lesdits moyens d'entraînement des billes (18) entraînées sont constitués par au moins un organe à déplacement linéaire disposé au-dessous du plan de transfert et d'orientation, la face supérieure dudit organe à déplacement linéaire étant en contact permanent avec la partie inférieure des billes (18) entraînées de la table à billes (3) entraînées et avec la partie inférieure des billes (18) entraînées dudit plateau tournant (2) à billes (18) entraînées quand ce dernier est sunstantiellement dans le plan de la table, les moyens pour déplacer verticalement ledit plateau tournant (2) à billes (18) entraînées sont constitués par au moins un vérin (82) piloté en fonction de l'importance du format des objets travaillés, monté entre un châssis inférieur du dispositif et une semelle (78) supportant, à l'aide de bras (84), le plateau tournant (2) à billes (18) entraînées et lesdites billes entraînées (18) de la table à billes (3) entraînées et du plateau tournant (2) à billes (18) entraînées sont insérées dans des moyens de guidage.

2. Dispositif selon la revendication (1) caractérisé en ce que le palier central du plateau tournant (2) est constitué par un palier lisse inférieur (53) et par un palier lisse supérieur (89).

3. Dispositif selon la revendication 1 caractérisé en ce que l'organe de soutien du plateau tournant (2) est constitué par des coulisseaux de guidage (85) équipés de galets-support (86) en contact avec la périphérie de la face inférieure du plateau tournant (2).

4. Dispositif selon la revendication 1 caractérisé en ce que le palier central du plateau tournant (2) est constitué par une douille centrale cannelée, montée dans les moyens d'entraînement en rotation dudit plateau tournant (2).

5. Dispositif selon les revendications 1 et 2 caractérisé en ce que l'actuateur rotatif est un moteur-réducteur (37) monté sur l'arbre (36) du plateau tournant (2) entre lesdits paliers lisses inférieur (53) et supérieur (89).

6. Dispositif selon la revendication 1 caractérisé en ce que l'actuateur rotatif est un moteur-réducteur sur l'axe duquel est monté un galet d'entraînement (25) agissant sur la circonférence du plateau tournant (2).

7. Dispositif selon la revendication 1 caractérisé en ce que l'organe à déplacement linéaire est constitué par au moins un tapis sans fin (24), monté entre des rouleaux avant (26) et arrière (28), ledit tapis se déplaçant au-dessus d'une tôle d'appui (60).

8. Dispositif selon la revendication 7 caractérisé en ce que l'organe à déplacement linéaire est constitué par deux tapis sans fin (22 et 23) montés côte à côte sur des rouleaux doubles avant (20) et arrière (21), lesdits tapis se déplaçant au-dessus d'une tôle d'appui (60).

9. Dispositif selon la revendication 1 caractérisé en ce que l'organe à déplacement linéaire est constitué par au moins une chaîne de transport à plateaux rigides.

10. Dispositif selon les revendications 1 et 3 caractérisé en ce que les moyens pour déplacer verticalement le plateau tournant (2) sont constitués par un vérin placé à l'extrémité inférieure de l'arbre (36) du plateau tournant (2), ledit vérin agissant sur l'arbre (36) par l'intermédiaire d'une butée à billes, de manière à le faire coulisser dans la douille centrale cannelée des moyens d'entraînement en rotation du plateau tournant (2).

11. Dispositif selon la revendication 1 caractérisé en ce que les moyens de guidage des billes (18) sont constitués par une douille à billes (69) comprenant un corps tubulaire (111) possédant un alésage (112) calibré, ledit corps cylindrique comportant, à sa partie supérieure, une collerette (113) et ledit alésage (112) présentant, à sa partie inférieure, un étranglement (114) chanfreiné servant de siège à la bille (18).

## Patentansprüche

1. Vorrichtung zur Uebergabe und zum Ausrichten flacher in Paketen angeordnerter Werkstücke, vorzugsweise Werkstücke in Form flacher aufeinander gestapelter Stanzlinge aus Karton oder Wellpappe, mit einer Uebergabe- und Ausrichtebene, welche eine Kugelplatte, Antriebsmittel für aufeinander folgende Rotationen der erwähnten Kugelplatte, Mittel zum Antrieb der erwähnten Kugeln sowie Mittel zum vertikalen Verschieben der erwähnten Kugelplatte, in welcher die erwähnte Uebergabe- und Ausrichtebene aus einem Tisch mit angetriebenen Kugeln besteht, welch letztere eine durch ein zentrales Lager abgestützte Drehplatte (2) mit angetriebenen Kugeln (18) umgibt, wobei die erwähnte kreisförmige Drehplatte (2) mit angetriebenen Kugeln (18) auf einem Abstützorgan aufliegt so, dass ihre Ebene auf diejenige des erwähnten Tisches mit angetriebenen Kugeln (3) ausgerichtet ist, während die erwähnten Mittel zum rotativen Antrieb der Drehplatte (2) mit den angetriebenen Kugeln (18) aus einem Rotationsbetätigungsaggregat bestehen, welches entsprechend der den zu verarbeitenden Werkstücken zu erteilenden Ausrichtung gesteuert wird, die erwähnten, zum .Antrieb der anzutreibenden Kugeln (18) erforderlichen Mittel aus wenigstens einem linearen Förderorgan unter der Uebergabe- und Ausrichtebene bestehen, indem die Oberseite des erwähnten linearen Förderorgans in dauerndem Kontakt mit dem unterer Teil der angetriebenen Kugeln (18) des Tisches mit den angetriebenen Kugeln (3) sowie mit dem unteren Teil der angetriebenen Kugeln (18) der erwähnte Drehplatte (2) mit angetriebenen Kugeln (18) steht, wenn die letztere Drehplatte sich grossenteils in der Ebene des Drehtisches befindet, und die Mittel für die vertikale Verschiebung der erwähnten Drehplatte (2) mit angetriebenen Kugeln (18) aus wenigstens einem Weber (82) mit Steuerung entsprechend der Grösse der zu bearbeitenden Werkstücke und Anordnung zwischen einem unteren Schliessrahmen der Vorrichtung und einer Unterlage (78) bestehen, welche mit Hilfe des Betätigungsarms (84) die Drehplatte (2) mit angetriebenen Kugeln (18) abstützt, wobei die erwähnten angetriebenen Kugeln (18) des Tisches mit angetriebenen Kugeln (3) und der Drehplatte (2) mit angetriebenen Kugeln (18) in die Führungsmittel eingesetzt sind, umfasst.

2. Vorrichtung entsprechend Anspruch 1, dadurch gekennzeichnet, dass das zentrale Lager der Drehplatte (2) aus einem glatten unteren Lager (53) und einem glatten oberen Lager (89) besteht.

3. Vorrichtung entsprechend Anspruch 1, dadurch gekennzeichnet, dass das Abstützorgan der Drehplatte (2) aus Führungsgleitstücken (85) mit Stützrollen (86) besteht, welch letztere mit der Peripherie der Unterseite der Drehplatte (2) in Berührung steht.

4. Vorrichtung entsprechend Anspruch 1, dadurch gekennzeichnet, dass das zentrale Lager der Drehplatte (2) aus einer genuteten zentralen Buchse besteht, welche in die Mittel zum rotativen Antrieb der erwähnten Drehplatte (2) eingebaut ist.

5. Vorrichtung entsprechend den Ansprüchen 1 und 2, dadurch gekennzeichnet, dass das Rotationsbetätigungsaggregat aus einem Motor mit Reduktionsgetriebe (37) besteht, welches auf die Welle (63) der Drehplatte (2) zwischen den erwähnten glatten Lagern unten (35) und oben (89) an geordnet ist.

6. Vorrichtung entsprechend Anpsruch 1, dadurch gekennzeichnet, dass das Rotationsbetätigungsaggregat aus einem Motor mit Reduktionsgetriebe, auf dessen Achse eine auf den Umfang der Drehplatte (2) einwirkende Antriebsrolle (25) angeordnet ist, besteht.

7. Vorrichtung entsprechend Anspruch 1, dadurch gekennzeichnet, dass das lineare Förderorgan wenigstens aus einem zwischen der vorderen und hinteren Rolle (26 bzw. 28) angeordneten Endlosteppich (24) besteht, welcher über ein Stützblech (60) läuft.

8. Vorrichtung entsprechend Anspruch 7, dadurch gekennzeichnet, dass das lineare Förderorgan aus zwei nebeneinander auf der Doppelrollen vorn und hinten (20 bzw. 21) angeordneten Endlosteppichen (22, 23) besteht, welche über ein Stützblech (60) laufen.

9. Vorrichtung entsprechend Anspruch 1, dadurch gekennzeichnet, das das lineare Förderorgan aus wenigstens einer Transportkette mit steifen Platten besteht.

10. Vorrichtung entsprechend Anspruch 1 und 3, dadurch gekennzeichnet, dass die Mittel zum vertikalen Bewegen der Drehplatte (2) aus einem am unteren Ende der Welle (36) der Drehplatte angebrachten Hebers bestehen, welchletzterer über ein Drucklager so auf die Welle (36) einwirkt, dass diese in der zentralen genuteten Buchse der Mittel zum rotativen Antrieb der Drehplatte (2) gleitet.

11. Vorrichtung entsprechend Anspruch 1, dadurch gekennzeichnet, dass die Mittel zur Führung der Kugeln (18) aus einer Kugelbuchse (69), die einen Rohrkörper (111) mit einer kalibrierten Bohrung (112) besitzt, besteht, wobei der erwähnte Rohrkörper in seinem oberen Abschnitt eine Ringeinfassung (113) umfasst, während die Bohrung ( 112) in ihrem unteren Abschnitt eine Abschrägung (114) besitzt, die der Kugel (18) als Sitz dient.

## Claims

1. Device for transferring and aligning batchwise arranged flat workpieces, especially objects such as blanks cut from cardboard or corrugated board, and piled on one another, comprising a transfer and aligning plane with a ball plate, driving means ensuring the sequential rotation of the said ball plate, means for driving the said balls and means for moving the said hall plate vertically in which the said transfer and aliging plane consists of a table with driven balls (3), the said table surrounding a turn plate (2) with driven balls (18), the said plate being carried by a central bearing, the said round-shaped turn plate (2) with driven balls (18) being carried by a supporting device so that its plane will be aligned with the plane represented by the said table with driven balls (3), the said means for rotarily driving the turn plate (2) with driven balls (18) consisting of a rotary driver directed as required by the alignment wanted for the workpieces processed, the said means for driving the balls (18) consisting of at least one linear carrier arranged underneath the transfer and aligning plane, the upper side of the linear carrier being in permanent contact with the lower part of the driven balls (18) of the table with driven balls (3) and with the lower part of the driven balls (18) of the said turn plate (2) with driven balls (18) when the latter turn plate is essentially contained in the table plane, the means for vertically moving the said turn plate (2) with driven balls (18) consisting of at least a jack (82) directed as required by the size of the workpieces processed, and fitted between the lower chase of the device and a pad (78) carrying with the arm (84) the turn plate (2) with driven balls (18), the said driven balls (18) of the table with driven balls (3) and of the turn plate (2) with driven balls (18) being incorporated into the guiding means.

2. Device according to claim 1, characterised by a central bearing of the turn plate (2) consisting of a lower smooth bearing (53) and an upper smooth hearing (89).

3. Device according to claim 1, characterised by the supporting device of the turn plate (2) consisting of guiding shoes (85) equipped with supporting rollers (86) themselves in contact with the periphery of the lower side of the turn plate (2).

4. Device according to claim 1, characterised by the central bearing of the turn plate (2) consisting of a central grooved bushing fitted into the rotary drive means of the said turn plate (2).

5. Device according to claims 1 and 2, characterised by the rotary driver being an assembly of motor and reduction gear (37) fitted on the shaft (36) of the turn plate (2) between the said lower and upper smooth bearings (53 and 89 respectively).

6. Device according to claim 1, characterised by the rotary driver being an assembly of motor and reduction gear on the axle of which a drive roller (25) has been fitted for acting on the circumference of the turn plate (2).

7. Device according to claim 1, characterised by the linear carrier consisting of at least one endless belt (24) fitted between front and back rollers (26 and 28 respectively), the said belt moving above a supporting plate (60).

8. Device according to claim 7, characterised by the linear carrier consisting of two endless belts (22 and 23) arranged side by side on the twin front and rear rollers (20 and 21 respectively), the said belts moving above a supporting plate (60).

9. Device according to claim 1, characterised by the linear carrier consisting of at least one conveyor chain with rigid plates.

10. Device according to claims 1 and 3, characterised by the means for vertically moving the turn plate (2) consisting of a jack situated at the lower end of the shaft (36) of the turn plate (2), the said jack acting on the shaft (36) by means of a thrust ball bearing so as to have the means for rotarily driving the turn plate (2) slide within the central grooved bushing.

11. Device according to claim 1, characterised by the fact that the means for guiding the balls (18) consist of a ball bushing (69) comprising a tubular body with a calibrated bore (112), the said tubular body having a collar (113) in its upper part, the said bore (112) being provided in its upper part with a chamfered throttling (114) used as seat for the ball (18).

FIG. 1

# FIG. 2

# FIG. 2a

# FIG. 3

EP 0 369 133 B1

F I G. 4

FIG. 5

EP 0 369 133 B1

# FIG. 6